# EUROPEAN PATENT SPECIFICATION

(11) **EP 3 822 875 B1**
(45) Date of publication and mention of the grant of the patent: **28.01.2026**
(21) Application number: 21163447.2
(22) Date of filing: 18.03.2021
(51) Int. Cl.: G06F 16/901, G06F 16/907, G06F 40/295, G06F 40/30, G06N 5/022, G06Q 10/10

(54) **METHOD AND APPARATUS FOR OUTPUTTING INFORMATION, DEVICE, STORAGE MEDIUM, AND COMPUTER PROGRAM PRODUCT**
VERFAHREN UND EINRICHTUNG ZUR AUSGABE VON INFORMATIONEN, VORRICHTUNG, SPEICHERMEDIUM UND COMPUTERPROGRAMMPRODUKT
PROCÉDÉ ET APPAREIL DE GÉNÉRATION D'INFORMATIONS, DISPOSITIF, SUPPORT DE STOCKAGE ET PRODUIT PROGRAMME INFORMATIQUE

(30) Priority: 15.09.2020 CN 202010966286
(43) Date of publication of application: 19.05.2021
(73) Proprietor: BEIJING BAIDU NETCOM SCIENCE TECHNOLOGY CO., LTD., Beijing 100085 (CN)
(72) Inventor: WANG, Haiwei, Beijing, Beijing 100085 (CN); WANG, Haifeng, Beijing, Beijing 100085 (CN); HE, Wei, Beijing, Beijing 100085 (CN); LI, Ying, Beijing, Beijing 100085 (CN); ZHU, Yong, Beijing, Beijing 100085 (CN); WANG, Jie, Beijing, Beijing 100085 (CN)
(74) Representative: Müller, Christian Stefan Gerd

(56) References cited:
- CN-A- 109 189 938
- JP-A- 2007 034 419
- JP-A- 2011 008 440
- US-A1- 2019 220 752

## Description

### TECHNICAL FIELD

The present disclosure relates to the field of computer technology, particularly to the fields of knowledge graph and knowledge sharing, and more particularly to a method and apparatus for outputting information, a device and a storage medium.

### BACKGROUND

In the daily work of an enterprise, employees are required to face office scenarios such as a large number of business and procedure processing, communication, cooperation, and knowledge information acquisition. In a traditional office mode, enterprise knowledge is relatively scattered, and more dependent on the accumulated experience of the employees themselves, which is not beneficial to the precipitation, transmission and reuse of valuable and tacit knowledge. Moreover, the employees are required to spend a lot of energy in finding knowledge, finding a person, and finding a cooperation in their daily work. In addition, there is often a situation where the knowledge is there but cannot be found out or a situation where there is no relevant knowledge, resulting in a low organization and office efficiency. With the development of technology such as the Internet and big data and the popularization of online office, smart working based on the enterprise knowledge management is increasingly paid attention to and becomes a key path to the improvement of the enterprise efficiency.
CN 109189938 A describes a method and apparatus for updating a knowledge map which incorporates entities representing the video into a pre-established knowledge map, for improving the comprehensiveness of searching the video using the knowledge map. JP 2007034419 A provides an information collecting and distributing system capable of efficiently supporting users' operations. US 2019/220752 A1 discloses a method, apparatus, server, and storage medium for incorporating a structured entity into a knowledge map.

### SUMMARY

A method and apparatus for outputting information, a device, a storage medium, and a computer program product are provided.

In a first aspect, a method for outputting information according to claim 1 is provided.

In a second aspect, an electronic device for outputting information according to claim 7 is provided.

In a third aspect, a non-transitory computer readable storage medium according to claim 8 is provided.

In a fourth aspect, a computer program product according to claim 9 is provided.

According to the technology of the present disclosure, the related information of the user and the knowledge data are acquired, and the knowledge graph is constructed and outputted. In this way, a rich and comprehensive knowledge base may be provided for an enterprise to implement smart working.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

Accompanying drawings are used for a better understanding of the scheme, and do not constitute a limitation to the present disclosure. Here:
Fig. 1 is a diagram of a system architecture in which an embodiment of the present disclosure may be applied;
Fig. 2 is a flowchart of a method for outputting information according to an embodiment of the present disclosure;
Fig. 3 is a schematic diagram of an application scenario of the method for outputting information according to an embodiment of the present disclosure;
Fig. 4 is a flowchart of a method for outputting information according to another embodiment of the present disclosure;
Fig. 5 is a schematic structural diagram of an apparatus for outputting information according to an embodiment of the present disclosure; and
Fig. 6 is a block diagram of an electronic device adapted to implement the method for outputting information according to embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Also, for clarity and conciseness, descriptions for well-known functions and structures are omitted in the following description.

The present disclosure will be described below in detail with reference to the accompanying drawings and in combination with the embodiments.

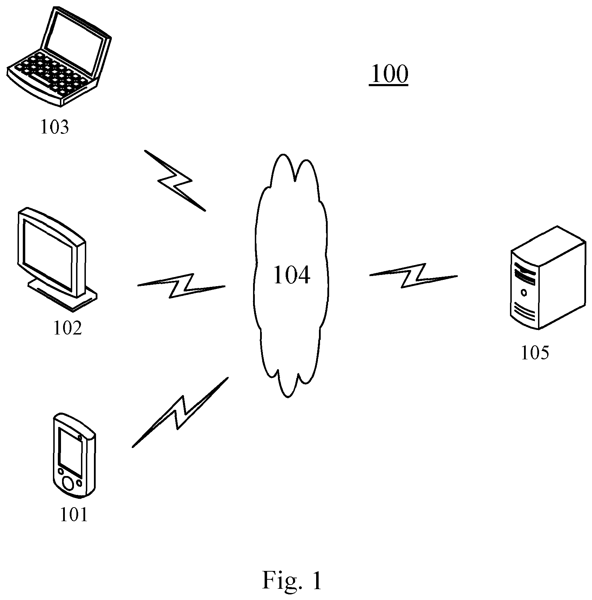

Fig. 1 illustrates a system architecture 100 in which a method for outputting information or an apparatus for outputting information according to an embodiment of the present disclosure may be applied.

As shown in Fig. 1, the system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

A user may interact with the server 105 via the network 104 by using the terminal device 101, 102 or 103, to receive or send a message, etc. Various client applications (e.g., an audio and video playback application, a browser application, a social platform application, and a knowledge sharing application) may be installed on the terminal devices 101, 102 and 103.

The terminal devices 101, 102 and 103 may be hardware or software. When being the hardware, the terminal devices 101, 102 and 103 may be various electronic devices, including, but not limited to, a smart phone, a tablet computer, an e-book reader, a vehicle-mounted computer, a laptop portable computer, a desktop computer, etc. When being the software, the terminal devices 101, 102 and 103 may be installed in the above listed electronic devices. The terminal devices may be implemented as a plurality of pieces of software or a plurality of software modules (e.g., software or software modules for providing a distributed service), or may be implemented as a single piece of software or a single software module, which will not be specifically defined here.

The server 105 may be a server providing various services, for example, a backend server providing employee information according to the terminal devices 101, 102 and 103. The backend server may acquire a user identifier, and feed back a to-be-learned knowledge point corresponding to the user identifier to the terminal devices 101, 102 and 103.

It should be noted that the server 105 may be hardware or software. When being the hardware, the server 105 may be implemented as a distributed server cluster composed of a plurality of servers, or may be implemented as a single server. When being the software, the server 105 may be implemented as a plurality of pieces of software or a plurality of software modules (e.g., software or software modules for providing a distributed service), or may be implemented as a single piece of software or a single software module, which will not be specifically defined here.

It should be noted that the method for outputting information provided in the embodiments of the present disclosure is generally performed by the server 105. Correspondingly, the apparatus for outputting information is generally provided in the server 105.

It should be appreciated that the numbers of the terminal devices, the networks and the servers in Fig. 1 are merely illustrative. Any number of terminal devices, networks and servers may be provided based on actual requirements.

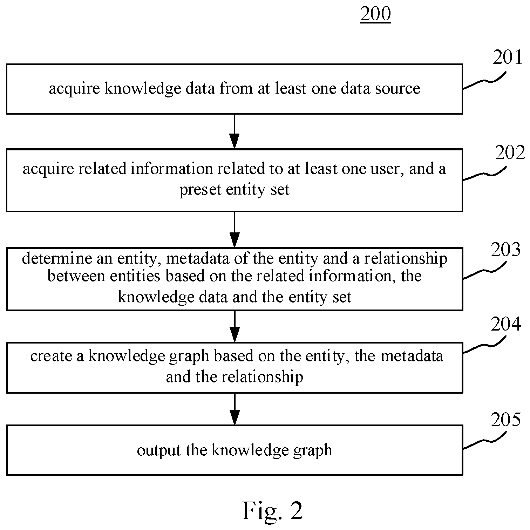

Further referring to Fig. 2, Fig. 2 illustrates a flow 200 of a method for outputting information according to an embodiment of the present disclosure. The method for outputting information include following steps:

Step 201, acquiring knowledge data from at least one data source.

In this embodiment, an executing body (e.g., the server 105 shown in Fig. 1) of the method for outputting information acquires the knowledge data from the at least one data source in various ways. The above data source may be a source generating the data, which may include a document tool. The tool may assist an employee in forming a conveniently explicit and online precipitation of knowledge such as a scheme, a conclusion and experience in daily work. The above data source may also include various office procedure platforms such as a project management platform, a code hosting platform, and a weekly report system. A large amount of valuable data may be accumulated through the above platforms in the employees' daily work. In some applications, the procedures of the above platforms may be standardized to improve the degree of structuration of the knowledge data generated by the above platforms, thereby improving the subsequent data understanding efficiency and application effect. The above data source may also include a platform such as a community forum and/or a question-and-answer platform, and the platform may build a bridge between a knowledge demand and a knowledge production, introduce a person through operating to discuss and answer a question from a question provider, and precipitate the question and the answer into knowledge. The above data source may also include knowledge generated in the Internet. Through a directional mining tool, the executing body may mine external knowledge and trends of related affairs required for an enterprise business scenario from the above data source by means of a search engine and/or a crawler technology. As can be seen from the above introduction, the knowledge data may include a document generated by a user in the process of applying a document tool, procedure data generated by various office procedure platforms in an enterprise, question and answer data generated by a platform such as the community forum, and/or the mined external knowledge.

Step 202, acquiring related information related to at least one user, and a preset entity set.

The executing body further acquires the information related to the at least one user, and the preset entity set. Here, the at least one user may be employees belonging to the same work organization or users using the same office software. The above related information may include a position of the employee, an identifier of the employee, a team to which the employee belongs, a project in which the employee participates, a knowledge point involved in the project, and the like. The preset entity set may be a list containing a plurality of entities that is set by a technician according to an actual application scenario. For example, the entity set may include an employee in an enterprise, a team, a project, a knowledge point involved in the project, and the like. The executing body may acquire the above information from a server for storing enterprise information. In some applications, the entity set may include a plurality of systems, each of which includes a hierarchical relationship between entities of one type. For example, the entity set may include an employee system, a team system, a knowledge point system, a project system, and the like. The employee system may include a hierarchical relationship between employees, for example, may include a president, a senior vice president, a director ... and so on. The team system may include a hierarchical relationship between teams, e.g., Team A, Team B and Team C, and Team A1, Team A2 ... and so on included in Team A. the knowledge point system may include a hierarchical relationship between knowledge points. The project system may include a hierarchical relationship between projects.

Step 203, determining an entity, metadata of the entity and a relationship between entities according to the related information, the knowledge data and the entity set.

After acquiring the related information, the knowledge data and the entity set, the executing body determines the entity, the metadata of the entity and the relationship between entities. In this embodiment, the executing body may first perform entity recognition on the related information and the knowledge data. Then, the obtained entity recognition result is respectively compared with the entities in the entity set. If a similarity between the entity recognition result and an entity in the entity set is greater than a preset threshold value, the entity in the entity recognition result is the recognized entity. For example, if the entity set includes the entity "Zhang San," the entity recognition result includes the entity "Zhang San," the similarity therebetween is 100%, which is greater than the preset threshold value, "Zhang San" is the recognized entity. But if the entity recognition result includes the entity "Zhang Sansan," then the similarity therebetween is 67%, which is less than the preset threshold value, "Zhang Sansan" cannot be used as the recognized entity.

After recognizing the entity, the executing body may further perform dependency parsing on the related information and the knowledge data, to obtain the metadata of the entity. Here, the metadata is data for describing an entity. Moreover, the content of the metadata may be set by the technician according to the actual application scenario. For example, if the entity is an employee, the content of the metadata may include a basic attribute and a key relationship. Here, the basic attribute includes: a name, contact information, a position, and/or a level. The key relationship may include: a role (for explaining which team the employee belongs, which project the employee participates in), a technical direction (for explaining the knowledge point the employee is good at), and the like.

After the metadata of the entity is determined, the dependency parsing may be performed on the related information and the knowledge data, to obtain the relationship between the entities. Here, the relationship may include a leader-member relationship between employees, a mastery relationship between an employee and a knowledge point, an affiliation relationship between an employee and a team, and the like.

Step 204, creating a knowledge graph based on the entity, the metadata and the relationship.

After obtaining the entity, the metadata and the relationship, the executing body may use the entity as a node, use the metadata as information of the node, and use the relationship as an edge between nodes, to create and obtain the knowledge graph.

Step 205, outputting the knowledge graph.

In this embodiment, after obtaining the knowledge graph, the executing body output the knowledge graph. For example, the knowledge graph may be stored in a specific database, or outputted to a specific technician.

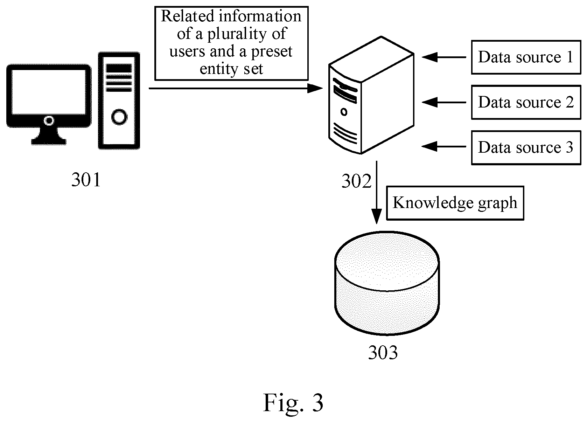

Further referring to Fig. 3, Fig. 3 is a schematic diagram of an application scenario of the method for outputting information. In the application scenario of Fig. 3, a server 301 may acquire knowledge data from data sources (a data source 1, a data source 2 and a data source 3). Here, the data source 1 refers to an office software applied by employees, the data source 2 refers to a professional knowledge forum, and the data source 3 refers to an office procedure platform of an enterprise. The server 301 may further acquire information related to a plurality of users, and a preset entity set from a terminal 302. Here, the terminal 302 may be a terminal used by a human resource department of the enterprise. The related information may be personnel-related information recorded by the human resource department, and the entity set may include the enterprise's personnel, a team and a project, and a knowledge point. After analyzing the related information and the knowledge data, the server 301 may determine the metadata of the personnel, team, project and knowledge point and the relationship therebetween, to create and obtain a knowledge graph, and store the knowledge graph in a database 303.

According to the method for outputting information provided in the above embodiment of the present disclosure, the related information of the user, the preset entity set, and the knowledge data are acquired, and the entity, the metadata of the entity and the relationship between the entities that are required to construct the knowledge graph are determined, which makes the information contained in the constructed knowledge graph richer and more comprehensive. The knowledge graph is outputted to a specific terminal or stored in a database, which may be convenient for the user to query the above knowledge graph, thereby providing a knowledge base for the enterprise to implement the smart working.

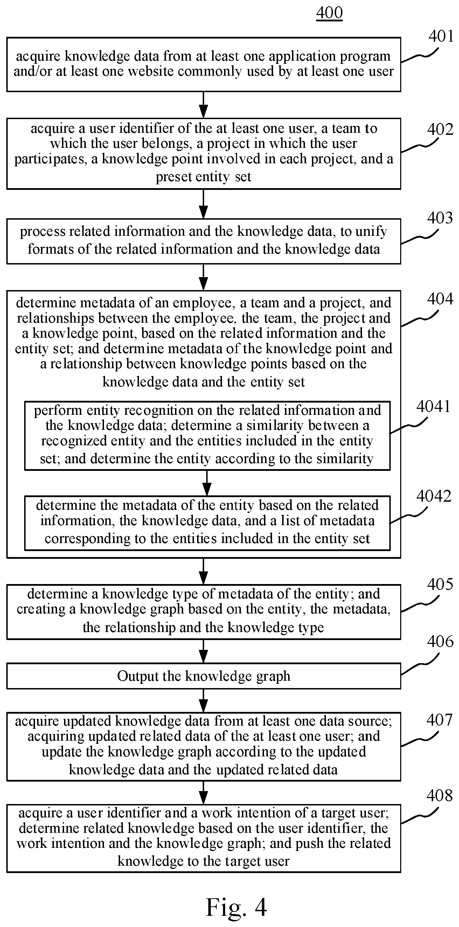

Further referring to Fig. 4, Fig. 4 illustrates a flow 400 of a method for outputting information according to another embodiment of the present disclosure. In this embodiment, the method for outputting information may include the following steps:

Step 401, acquiring knowledge data from at least one application program and/or at least one website commonly used by at least one user.

In this embodiment, an executing body acquires the knowledge data from the at least one application program and/or at least one website commonly used by users. Here, the users may refer to a plurality of users belonging to the same working organization. Each user works through the above application program and thus, various office data is generated. Each user may perform a work communication on the above website, for example, issue a related notification, or communicate about a related project.

Step 402, acquiring a user identifier of the at least one user, a team to which the user belongs, a project in which the user participates, a knowledge point involved in each project, and a preset entity set.

The executing body further acquires the user identifier of the at least one user, the team to which the user belongs, the project in which the user participates, the knowledge point involved in the each project, and the preset entity set. The user identifier may be various identifiers capable of uniquely representing a target user, for example, may be an identity card number, a mailbox user name, and a registration account number. The team may include at least two employees, and a single employee may belong to different teams. The project may be in the charge of at least one team, and a single team may also be in charge of a plurality of projects. Similarly, an employee may participate in a plurality of projects. Each project may correspond to a plurality of sections of code, and each section of code may involve a plurality of knowledge points.

Step 403, processing related information and the knowledge data, to unify formats of the related information and the knowledge data.

In this embodiment, after acquiring the related information and the knowledge data, the executing body processes the related information and the knowledge data. The above processing may include data cleaning, deduplication, field mapping, and the like. The data cleaning is used to clean out unwanted data in the related information and the knowledge data. The deduplication refers to the removal of duplicate data in the related information and the knowledge data. The field mapping refers to the mapping of a field in the related information and the knowledge data to a field of a corresponding format. The executing body may also perform a format conversion on the related information and the knowledge data to obtain data having a uniform format and a specified form, thereby facilitating subsequent processing.

Step 404, determining metadata of an employee, a team and a project, and relationships between the employee, the team, the project and a knowledge point, based on the related information and the entity set, and determining metadata of the knowledge point and a relationship between knowledge points based on the knowledge data and the entity set.

Based on the related information and the entity set, the executing body may determine the metadata of the employee, the team and the project, and the relationships between the employee, the team, the project and the knowledge point. Particularly, the executing body may obtain a plurality of entity mentions after performing the semantic analysis on the related information. The entity mentions are compared with the entities included in the entity set, to determine an employee, a team and a project included in the related information. Then, dependency parsing is performed on the related information to determine the metadata of the above entities and the relationships between the entities. The executing body may further perform semantic analysis on the knowledge data based on the knowledge data and the entity set, to determine the metadata of the knowledge point, and determine a relationship between the knowledge points.

The executing body may implement the determination for the entity, the metadata, and the relationship between entities through following steps 4041-4042:

Step 4041, performing entity recognition on the related information and the knowledge data; determining a similarity between a recognized entity and each entity included in the entity set; and determining the entity according to the similarity.

In this embodiment, the executing body may perform the entity recognition on the related information and the knowledge data to obtain an entity mention included in the related information and the knowledge data. Then, the executing body may respectively calculate a similarity between the entity mention and the each entity in the entity set. Particularly, the executing body may determine the similarity between the entity mention and the each entity based on an editing distance between the entity mention and the each entity, and/or a distance between vectors. The executing body may use the entity mention having a similarity greater than a preset threshold value as the recognized entity.

Step 4042, determining the metadata of the entity based on the related information, the knowledge data, and a list of metadata corresponding to the entities included in the entity set.

In this embodiment, the executing body may further acquire the list of metadata. The list of metadata includes metadata corresponding to the each entity. For example, the metadata of the entity "project" or "team" may include an entity attribute, a key relationship, and side knowledge. Here, the entity attribute may include the name, alias, introduction, etc. of the "project" or "team." The key relationship may include a superordinate-subordinate project or team that the "project" or "team" is in cooperation with or dependent on, may include a tool or platform developed and maintained by the "project" or "team," may include a professional knowledge point researched and applied by the "project" or "team," or may include a member and a person-in-charge. The side knowledge may include a demand, an evaluation, a research, a scheme, planning, minutes of a meeting, a paper, a patent, and a problem feedback.

The executing body may determine the metadata of the each entity according to the list of metadata.

Step 405, determining a knowledge type of metadata of the entity; and creating a knowledge graph based on the entity, the metadata, the relationship and the knowledge type.

The executing body may further determine the knowledge type of the metadata of the each entity. The above knowledge type may include a user manual, a use case, a user evaluation, and the like. The executing body may create the knowledge graph based on the entity, the metadata, the relationship, and the knowledge type. In this way, a knowledge graph having rich content may be obtained.

Step 406, outputting the knowledge graph.

Step 407, acquiring updated knowledge data from at least one data source; acquiring updated related data of the at least one user; and updating the knowledge graph according to the updated knowledge data and the updated related data.

After creating the knowledge graph, the executing body may further continuously acquire the updated knowledge data from each data source. The above updated knowledge data may be new data generated by the user during work. Similarly, the executing body may further acquire the updated related data of each user. Here, the updated related data may include a newly recruited employee or a newly joined user, and related data generated based on these user. The executing body may perform the processing of steps 201-205 on the updated knowledge data and the updated related data, to update the knowledge graph.

Step 408, acquiring a user identifier and a work intention of a target user; determining related knowledge based on the user identifier, the work intention and the knowledge graph; and pushing the related knowledge to the target user.

After obtaining the knowledge graph, the executing body may apply the knowledge graph to the smart office. That is, the user identifier and the work intention of the target user are acquired. Here, the user identifier may be a unique identifier of the user inside the working organization, for example, an identity card number, a mobile phone number, or a mailbox user name. the work intention refers to what the user currently intends to do. For example, the work intention may include "researching a competitive product," "writing minutes of a meeting," and the like. After obtaining the user identifier, the executing body may query the above knowledge graph to determine a corresponding employee entity, and then determine an employee entity related thereto, a team entity related thereto, a project entity related thereto and a knowledge point entity related thereto. The knowledge including the work intention included in the knowledge points related to these related entities is used as the related knowledge. For example, if the work intention of a user A is to "write minutes of a meeting with a meeting topic XX," a user B related to the user A in the knowledge graph may be determined, and the user B and the user A belong to the same team. The executing body may use the knowledge "minutes of a meeting" related to the knowledge point "the meeting topic XX" associated with user B as the related knowledge related to the work intention of the user A. The above related knowledge is pushed to the user A for reference, for user A to quickly complete the writing of the minutes of the meeting.

According to the method for outputting information provided in the above embodiment of the present disclosure, the knowledge graph having rich and comprehensive content may be created, and the above knowledge graph may be applied to the field of smart office, which is convenient for the employee to query the related knowledge more quickly, thereby improving the office efficiency of the employee.

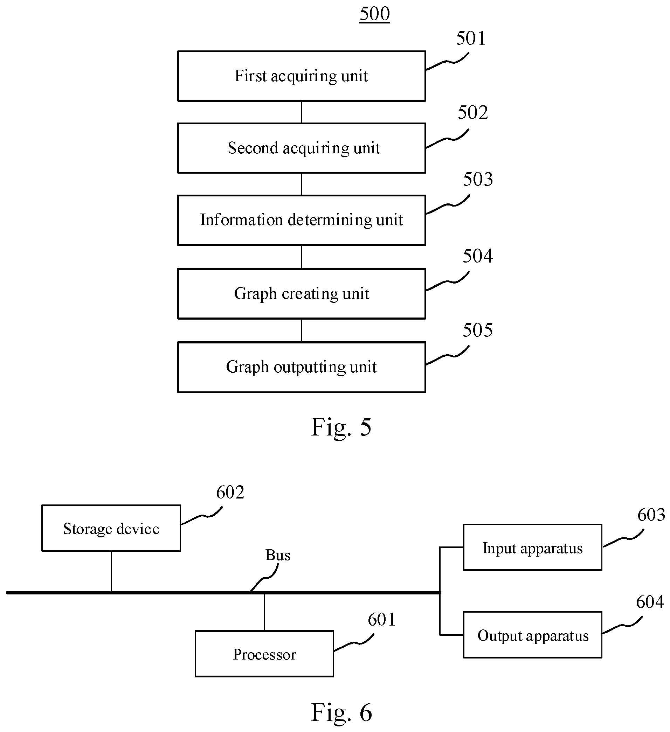

Further referring to Fig. 5, as an implementation of the method shown in the above drawings, an embodiment of the present disclosure provides an apparatus for outputting information. The embodiment of the apparatus corresponds to the embodiment of the method shown in Fig. 2, and the apparatus may be s applied to various electronic devices.

As shown in Fig. 5, the apparatus 500 for outputting information in this embodiment includes: a first acquiring unit 501, a second acquiring unit 502, an information determining unit 503, a graph creating unit 504, and a graph outputting unit 505.

The first acquiring unit 501 is configured to acquire knowledge data from at least one data source.

The second acquiring unit 502 is configured to acquire related information related to at least one user and a preset entity set.

The information determining unit 503 is configured to determine an entity, metadata of the entity and a relationship between entities based on the above related information, the above knowledge data and the above preset entity set.

The graph creating unit 504 is configured to create a knowledge graph based on the above entity, the above metadata and the above relationship.

The graph outputting unit 505 is configured to output the above knowledge graph.

In some alternative implementations of this embodiment, the first acquiring unit 501 may be further configured to: acquire the knowledge data from at least one application program commonly used by the at least one user or at least one website commonly used by the above at least one user.

In some alternative implementations of this embodiment, the second acquiring unit 502 may be further configured to: acquire a user identifier of the above at least one user, a team to which the user belongs, a project in which the user participates, a knowledge point involved in each project, and the preset entity set.

In some implementations of this embodiment, entities included in the entity set comprise an employee, a team, a project, and a knowledge point involved in the project. The information determining unit 503 may be further configured to: determine metadata of the employee, metadata of the team and metadata of the project, and relationships between the employee, the team, the project and the knowledge point, based on the above related information and the above entity set; and determine metadata of the knowledge point and a relationship between knowledge points based on the above knowledge data and the above entity set.

In some alternative implementations of this embodiment, the information determining unit 503 may be further configured to: perform entity recognition on the above related information and the above knowledge data; determine a similarity between a recognized entity and each entity included in the above entity set; and determine the entity based on the above similarity.

In some alternative implementations of this embodiment, the information determining unit 503 may be further configured to: determine the metadata of the entity, based on the above related information, the above knowledge data, and a list of metadata corresponding to entities included in the above entity set.

In some alternative implementations of this embodiment, the graph creating unit 504 may be further configured to: determine a knowledge type of metadata of the entity; and create the knowledge graph based on the above entity, the above metadata, the above relationship and the above knowledge type.

In some alternative implementations of this embodiment, the apparatus 500 may further include a graph updating unit (not shown in Fig. 5), and the graph updating unit is configured to: acquire updated knowledge data from the above at least one data source; acquire updated related data of the above at least one user; and update the above knowledge graph according to the above updated knowledge data and the above updated related data.

In some alternative implementations of this embodiment, the apparatus 500 may further include a data processing unit (not shown in Fig. 5), and the data processing unit is configured to: process the above related information and the above knowledge data, to unify formats of the above related information and the above knowledge data.

In some alternative implementations of this embodiment, the apparatus 500 may further include a knowledge pushing unit (not shown in Fig. 5), and the knowledge pushing unit is configured to: acquire a user identifier and a work intention of a target user; determine related knowledge, based on the above user identifier, the above work intention and the above knowledge graph; and push the above related knowledge to the above target user.

It should be understood that the described units 501-505 in the apparatus 500 for outputting information correspond to the steps in the method described with reference to Fig. 2 respectively. Therefore, the operations and features described above for the method for outputting information are also applicable to the apparatus 500 and the units contained therein, and will not be repeatedly described here.

According to embodiments of the present disclosure, an electronic device and a readable storage medium are provided.

As shown in Fig. 6, Fig. 6 is a block diagram of an electronic device performing the method for outputting information according to embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 6, one processor 601 is used as an example.

The memory 602 is a non-transitory computer readable storage medium provided by embodiments of the present disclosure. The memory stores instructions executable by at least one processor, so that the at least one processor performs the method for outputting information provided by embodiments of the present disclosure. The non-transitory computer readable storage medium of the present disclosure stores computer instructions for causing a computer to perform the method for outputting information provided by embodiments of the present disclosure.

The memory 602, as a non-transitory computer readable storage medium, may be used to store non-transitory software programs, non-transitory computer executable programs and modules, such as program instructions/modules corresponding to the method for processing parking in the embodiments of the present disclosure (for example, the first acquiring unit 501, the second acquiring unit 502, and the information determining unit 503, and the graph creating unit 504 shown in Fig. 5). The processor 601 executes the non-transitory software programs, instructions, and modules stored in the memory 602 to execute various functional applications and data processing of the server, that is, to implement the method for outputting information in the foregoing method embodiment.

The memory 602 may include a storage program area and a storage data area, where the storage program area may store an operating system and at least one function required application program; and the storage data area may store data created by the use of the electronic device according to the method for outputting information, etc. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device of the method for outputting information through a network. Examples of the above network include but are not limited to the Internet, intranet, local area network, mobile communication network, and combinations thereof.

The electronic device of the method for outputting information may further include: an input apparatus 603 and an output apparatus 604. The processor 601, the memory 602, the input apparatus 603, and the output apparatus 604 may be connected through a bus or in other methods. In Fig. 6, connection through a bus is used as an example.

The input apparatus 603 may receive input digital or character information, and generate key signal inputs related to user settings and function control of the electronic device of the method for processing parking, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), and the Internet.

The computer system may include a client and a server. The client and the server are generally far from each other and usually interact through the communication network. The relationship between the client and the server is generated by computer programs that run on the corresponding computer and have a client-server relationship with each other.

According to the technical solution described in embodiments of the present disclosure, a knowledge graph is constructed based on the information related to the users and the knowledge, so that the working efficiency of the users are improved.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure.

## Claims

1. A method for outputting information, the method comprising:
acquiring (201) knowledge data from at least one data source by means of a search engine and/or a crawler technology;
acquiring (202) related information related to at least one user and a preset entity set;
determining (203) an entity, metadata of the entity and a relationship between entities, based on the related information, the knowledge data and the preset entity set;
creating (204) a knowledge graph based on the entity, the metadata and the relationship; and
outputting (205) the knowledge graph,
wherein the acquiring (201) knowledge data from the at least one data source comprises:
acquiring (401) the knowledge data from at least one application program commonly used by the at least one user or at least one website commonly used by the at least one user,
wherein the method further comprises:
processing (403) the related information and the knowledge data, to unify formats of the related information and the knowledge data, wherein the processing includes data cleaning, deduplication, and field mapping, wherein the field mapping refers to the mapping of a field in the related information and the knowledge data to a field of a corresponding format,
wherein the method further comprises:
acquiring (408) a user identifier and a work intention of a target user;
determining related knowledge, based on the user identifier, the work intention and the knowledge graph; and
pushing the related knowledge to the target user,
wherein the acquiring (202) the related information related to the at least one user and the preset entity set comprises:
acquiring (402) a user identifier of the at least one user, a team to which the user belongs, a project in which the user participates, a knowledge point involved in each project, and the preset entity set, and
wherein entities included in the entity set comprise an employee, a team, a project, and a knowledge point involved in the project.

2. The method according to the preceding claim, wherein
the determining (203) the entity, the metadata of the entity and the relationship between entities according to the related information, the knowledge data and the entity set comprises:
determining (404) metadata of the employee, metadata of the team and metadata of the project, and relationships between the employee, the team, the project and the knowledge point, based on the related information and the entity set; and
determining metadata of the knowledge point and a relationship between knowledge points based on the knowledge data and the entity set.

3. The method according to any one of the preceding claims, wherein the determining (203) the entity, the metadata of the entity and the relationship between entities based on the related information, the knowledge data and the entity set comprises:
performing (4041) entity recognition on the related information and the knowledge data;
determining a similarity between a recognized entity and entities included in the entity set; and
determining the entity based on the similarity.

4. The method according to any one of the preceding claims, wherein the determining (203) the entity, the metadata of the entity and the relationship between entities based on the related information, the knowledge data and the entity set comprises:
determining (4042) the metadata of the entity, based on the related information, the knowledge data, and a list of metadata corresponding to entities included in the entity set.

5. The method according to any one of the preceding claims, wherein the creating (204) the knowledge graph based on the entity, the metadata and the relationship comprises:
determining a knowledge type of metadata of the entity; and
creating the knowledge graph based on the entity, the metadata, the relationship and the knowledge type.

6. The method according to any one of the preceding claims, further comprising:
acquiring (407) updated knowledge data from the at least one data source;
acquiring updated related data of the at least one user; and
updating the knowledge graph based on the updated knowledge data and the updated related data.

7. An electronic device for outputting information, comprising:
at least one processor; and
a storage device, communicated with the at least one processor,
wherein the storage device stores instructions executable by the at least one processor, and the instructions, when executed by the at least one processor, cause the at least one processor to perform the method according to any one of claims 1-6.

8. A non-transitory computer readable storage medium, storing a computer instruction, wherein the computer instruction, when executed by a processor, cause the processor to perform the method according to any one of claims 1-6.

9. A computer program product comprising a computer program, the computer program, when executed by a processor, causes the processor to implement the method according to any one of claims 1-6.

## Patentansprüche

1. Verfahren zum Ausgeben von Informationen, wobei das Verfahren umfasst:
Erlangen (201) von Wissensdaten aus mindestens einer Datenquelle mithilfe einer Suchmaschine und/oder einer Crawler-Technologie;
Erlangen (202) von zugehörigen Informationen, die zu mindestens einem Benutzer und einem voreingestellten Entitätensatz gehören;
Ermitteln (203) einer Entität, von Metadaten der Entität und einer Beziehung zwischen Entitäten, basierend auf den zugehörigen Informationen, den Wissensdaten und dem voreingestellten Entitätensatz;
Erstellen (204) eines Wissensgraphs basierend auf der Entität, den Metadaten und der Beziehung; und
Ausgeben (205) des Wissensgraphs,
wobei das Erlangen (201) der Wissensdaten aus der mindestens einen Datenquelle umfasst:
Erlangen (401) der Wissensdaten aus mindestens einem Anwendungsprogramm, das üblicherweise von dem mindestens einen Benutzer verwendet wird, oder mindestens einer Webseite, die üblicherweise von dem mindestens einen Benutzer verwendet wird,
wobei das Verfahren ferner umfasst:
Verarbeiten (403) der zugehörigen Informationen und der Wissensdaten, um Formate der zugehörigen Informationen und der Wissensdaten zu vereinheitlichen, wobei das Verarbeiten eine Datenbereinigung, eine Deduplikation und eine Feldzuordnung umfasst, wobei sich die Feldzuordnung auf das Zuordnen eines Feldes in den zugehörigen Informationen und den Wissensdaten zu einem Feld eines entsprechenden Formats bezieht,
wobei das Verfahren ferner umfasst:
Erlangen (408) einer Benutzerkennung und einer Arbeitsabsicht eines Zielbenutzers;
Ermitteln eines zugehörigen Wissens basierend auf der Benutzerkennung, der Arbeitsabsicht und dem Wissensgraph; und
Schieben des zugehörigen Wissens zu dem Zielbenutzer,
wobei das Erlangen (202) der zugehörigen Informationen, die zu dem mindestens einen Benutzer und dem voreingestellten Entitätensatz gehören, umfasst:
Erlangen (402) einer Benutzerkennung des mindestens einen Benutzers, eines Teams, zu dem der Benutzer gehört, eines Projekts, an dem der Benutzer teilnimmt, eines Wissensstands, der jedes Projekt betrifft, und des voreingestellten Entitätensatzes, und
wobei die Entitäten, die in dem Entitätensatz enthalten sind, einen Mitarbeiter, ein Team, ein Projekt und einen Wissensstand umfassen, der das Projekt betrifft.

2. Verfahren nach dem vorhergehenden Anspruch, wobei
das Ermitteln (203) der Entität, der Metadaten der Entität und der Beziehung zwischen Entitäten, gemäß den zugehörigen Informationen, den Wissensdaten und dem Entitätensatz, umfasst:
Ermitteln (404) von Metadaten des Mitarbeiters, Metadaten des Teams und Metadaten des Projekts, und von Beziehungen zwischen dem Mitarbeiter, dem Team, dem Projekt und dem Wissensstand, basierend auf den zugehörigen Informationen und dem Entitätensatz; und
Ermitteln von Metadaten des Wissensstands und einer Beziehung zwischen Wissensständen basierend auf den Wissensdaten und dem Entitätensatz.

3. Verfahren nach einem der vorhergehenden Ansprüche, wobei das Ermitteln (203) der Entität, der Metadaten der Entität und der Beziehung zwischen Entitäten, basierend auf den zugehörigen Informationen, den Wissensdaten und dem Entitätensatz, umfasst:
Durchführen (4041) von Entitätserkennung an den zugehörigen Informationen und den Wissensdaten;
Ermitteln einer Ähnlichkeit zwischen einer erkannten Entität und Entitäten, die in dem Entitätensatz enthalten sind; und
Ermitteln der Entität basierend auf der Ähnlichkeit.

4. Verfahren nach einem der vorhergehenden Ansprüche, wobei das Ermitteln (203) der Entität, der Metadaten der Entität und der Beziehung zwischen Entitäten, basierend auf den zugehörigen Informationen, den Wissensdaten und dem Entitätensatz, umfasst:
Ermitteln (4042) der Metadaten der Entität, basierend auf den zugehörigen Informationen, den Wissensdaten und einer Liste von Metadaten, die den Entitäten entsprechen, die in dem Entitätensatz enthalten sind.

5. Verfahren nach einem der vorhergehenden Ansprüche, wobei das Erstellen (204) des Wissensgraphs basierend auf der Entität, den Metadaten und der Beziehung umfasst:
Ermitteln eines Wissenstyps von Metadaten der Entität; und
Erstellen des Wissensgraphs basierend auf der Entität, den Metadaten, der Beziehung und dem Wissenstyp.

6. Verfahren nach einem der vorhergehenden Ansprüche, das ferner umfasst:
Erlangen (407) von aktualisierten Wissensdaten aus der mindestens einen Datenquelle;
Erlangen von aktualisierten zugehörigen Daten des mindestens einen Benutzers; und
Aktualisieren des Wissensgraphs basierend auf den aktualisierten Wissensdaten und den aktualisierten zugehörigen Daten.

7. Elektronische Vorrichtung zum Ausgeben von Informationen, umfassend:
mindestens einen Prozessor; und
eine Speichervorrichtung, die mit dem mindestens einen Prozessor kommuniziert,
wobei die Speichervorrichtung Anweisungen speichert, die durch den mindestens einen Prozessor ausführbar sind, und die Anweisungen, wenn sie von dem mindestens einen Prozessor ausgeführt werden, den mindestens einen Prozessor veranlassen, das Verfahren nach einem der Ansprüche 1 bis 6 durchzuführen.

8. Nicht-flüchtiges computerlesbares Speichermedium, in dem eine Computeranweisung gespeichert ist, wobei die Computeranweisung, wenn sie von einem Prozessor ausgeführt wird, den Prozessor veranlasst, das Verfahren nach einem der Ansprüche 1 bis 6 durchzuführen.

9. Computerprogrammprodukt, das ein Computerprogramm umfasst, wobei das Computerprogramm, wenn es von einem Prozessor ausgeführt wird, den Prozessor veranlasst, das Verfahren nach einem der Ansprüche 1 bis 6 zu implementieren.

## Revendications

1. Procédé pour délivrer en sortie des informations, le procédé comprenant les étapes consistant à :
acquérir (201) des données de connaissances à partir d'au moins une source de données au moyen d'un moteur de recherche et/ou d'une technologie de collecteur;
acquérir (202) des informations relatives qui sont relatives à au moins un utilisateur et un ensemble d'entités prédéfini ;
déterminer (203) une entité, des métadonnées de l'entité et une relation entre des entités, sur la base des informations relatives, des données de connaissance et de l'ensemble d'entités prédéfini ;
créer (204) un graphique de connaissances sur la base de l'entité, des métadonnées et de la relation ; et
délivrer en sortie (205) le graphique de connaissances,
dans lequel l'acquisition (201) de données de connaissance à partir d'au moins une source de données comprend l'étape consistant à :
acquérir (401) les données de connaissances à partir d'au moins un programme d'application couramment utilisé par le au moins un utilisateur ou d'au moins un site Web couramment utilisé par le au moins un utilisateur,
dans lequel le procédé comprend en outre l'étape consistant à :
traiter (403) les informations associées et les données de connaissances, pour unifier des formats des informations relatives et des données de connaissances, dans lequel le traitement comprend un nettoyage de données, un déduplication et un mappage de champ, dans lequel le mappage de champ se réfère au mappage d'un champ dans les informations relatives et les données de connaissances à un champ d'un format correspondant,
dans lequel le procédé comprend en outre les étapes consistant à :
acquérir (408) un identifiant d'utilisateur et une intention de travail d'un utilisateur cible ;
déterminer des connaissances relatives, sur la base de l'identifiant d'utilisateur, de l'intention de travail et du graphique de connaissances ; et
transmettre les connaissances relatives à l'utilisateur cible,
dans lequel l'acquisition (202) des informations relatives qui sont relatives à au moins un utilisateur et à l'ensemble d'entités prédéfini comprend l'étape consistant à :
acquérir (402) un identifiant d'utilisateur du au moins un utilisateur, une équipe à laquelle l'utilisateur appartient, un projet auquel l'utilisateur participe, un point de connaissance impliqué dans chaque projet et l'ensemble d'entités prédéfinies, et
dans lequel des entités incluses dans l'ensemble d'entités comprennent un employé, une équipe, un projet et un point de connaissance impliqué dans le projet.

2. Procédé selon l'une quelconque des revendications précédentes, dans lequel :
la détermination (203) de l'entité, des métadonnées de l'entité et de la relation entre des entités en fonction des informations relatives, des données de connaissances et de l'ensemble d'entités comprend les étapes consistant à :
déterminer (404) des métadonnées de l'employé, des métadonnées de l'équipe et des métadonnées du projet, et des relations entre l'employé, l'équipe, le projet et le point de connaissance, sur la base des informations relatives et de l'ensemble d'entités ; et
déterminer des métadonnées du point de connaissance et une relation entre des points de connaissance sur la base des données de connaissance et de l'ensemble d'entités.

3. Procédé selon l'une quelconque des revendications précédentes, dans lequel la détermination (203) de l'entité, des métadonnées de l'entité et de la relation entre des entités sur la base des informations relatives, des données de connaissance et de l'ensemble d'entités comprend les étapes consistant à :
effectuer (4041) une reconnaissance d'entité sur les informations relatives et les données de connaissances ;
déterminer une similitude entre une entité reconnue et des entités incluses dans l'ensemble d'entités ; et
déterminer l'entité sur la base de la similitude.

4. Procédé selon l'une quelconque des revendications précédentes, dans lequel la détermination (203) de l'entité, des métadonnées de l'entité et de la relation entre des entités sur la base des informations relatives, des données de connaissance et de l'ensemble d'entités comprend l'étape consistant à :
déterminer (4042) les métadonnées de l'entité, sur la base des informations relatives, des données de connaissance et d'une liste de métadonnées correspondant aux entités incluses dans l'ensemble d'entités.

5. Procédé selon l'une quelconque des revendications précédentes, dans lequel la création (204) du graphe de connaissances sur la base de l'entité, des métadonnées et de la relation comprend les étapes consistant à :
déterminer un type de connaissances de métadonnées de l'entité ; et
créer le graphe de connaissances en fonction de l'entité, des métadonnées, de la relation et du type de connaissances.

6. Procédé selon l'une quelconque des revendications précédentes, comprenant en outre les étapes consistant à
acquérir (407) des données de connaissances mises à jour à partir d'au moins une source de données ;
acquérir des données relatives mises à jour du au moins un utilisateur, et
mettre à jour le graphe de connaissances sur la base des données de connaissances mises à jour et des données relatives mises à jour.

7. Dispositif électronique permettant de délivrer en sortie des informations, comprenant :
au moins un processeur ; et
un dispositif de stockage, mis en communication avec le au moins un processeur,
dans lequel le dispositif de stockage stocke des instructions exécutables par le au moins un processeur, et les instructions, lorsqu'elles sont exécutées par le au moins un processeur, amènent le au moins un processeur à exécuter le procédé selon l'une quelconque des revendications 1 à 6.

8. Support de stockage non transitoire lisible par ordinateur, stockant une instruction informatique, dans lequel l'instruction informatique, lorsqu'elle est exécutée par un processeur, amène le processeur à exécuter le procédé selon l'une quelconque des revendications 1 à 6.

9. Produit de programme informatique comprenant un programme informatique, dans lequel le programme informatique, lorsqu'il est exécuté par un processeur, amène le processeur à mettre en œuvre le procédé selon l'une quelconque des revendications 1 à 6.
